(19) Europäisches Patentamt

European Patent Office

Office européen des brevets

(11) Veröffentlichungsnummer : **0 330 865 B1**

# (12) EUROPÄISCHE PATENTSCHRIFT

(45) Veröffentlichungstag der Patentschrift :
22.01.92 Patentblatt 92/04

(51) Int. Cl.⁵ : **C08F 2/24**

(21) Anmeldenummer : **89102054.7**

(22) Anmeldetag : **07.02.89**

(30) Priorität : **01.03.88 DE 3806497**
**01.12.88 DE 3840512**

(43) Veröffentlichungstag der Anmeldung :
**06.09.89 Patentblatt 89/36**

(45) Bekanntmachung des Hinweises auf die
Patenterteilung :
**22.01.92 Patentblatt 92/04**

(84) Benannte Vertragsstaaten :
**AT BE DE ES FR GB IT NL SE**

(56) Entgegenhaltungen :
**DE-A- 2 165 410**

(54) Verfahren zur Herstellung grossteiliger, wässriger Kunststoffdispersionen.

(73) Patentinhaber : **HÜLS
AKTIENGESELLSCHAFT
Patentabteilung / PB 15 - Postfach 13 20
W-4370 Marl 1 (DE)**

(72) Erfinder : **Schlüter, Herbert, Dr.
Hessische Strasse 4
W-4370 Marl (DE)**
Erfinder : **Scholz, Bernhard-Peter, Dr.
Clemensstrasse 5
W-4353 Oer-Erkenschwick (DE)**
Erfinder : **Holtrup, Wolfgang
Oderbruchstrasse 24
W-4370 Marl (DE)**
Erfinder : **Walther, Klaus, Dr.
Am Alten Sportplatz 17a
W-4370 Marl (DE)**

## Beschreibung

Die Erfindung betrifft ein Verfahren zur Herstellung großteiliger Dispersionen, deren Teilchen einen volumenmittleren Durchmesser dv im Bereich von 120 bis 400, insbesondere von 130 bis 300 nm aufweisen. Derartige Dispersionen sind noch nach Konzentrierung auf einen Feststoffgehalt von > 55 Massen-% fließfähig. Sie gelten daher als niedrigviskos.

Aus dem Stand der Technik sind bereits Verfahren bekannt, bei welchen während der Polymerisation in Batch-Fahrweise ein anionischer Emulgator, ein nichtionisches, wasserlösliches oder in Wasser dispergierbares, polymeres Hilfsmittel und ein wasserlösliches Salz zugegen sind.

In der DE-OS 2165410 werden als polymere Hilfsmittel Gelatine, kaustifizierte Stärke, Polyacrylamid, Polyethylenoxid (Polyethylenglykol), Polyvinylalkohol und Polyvinylmethylether vorgeschlagen. Die Polymerisation soll vorzugsweise in Gegenwart eines wasserlöslichen, ein zweiwertiges Metallion aufweisenden Salzes durchgeführt werden. Nachteilig ist, daß das Verfahren vergleichsweise lange Polymerisationszeiten erfordert. Im Hinblick auf die Wirtschaftlichkeit des Verfahrens sind dagegen kurze Polymerisationszeiten erwünscht. Dabei gilt die Regel, daß die Polymerisationszeit um so länger ist je größer die geforderte Teilchengröße ist.

In der EP-OS 115468 werden als polymere Hilfsmittel Ethylenoxid/Propylenoxid-Copolymerisate und Polyethylenoxid vorgeschlagen. Als anionischer Emulgator müssen Phosphatester zugesetzt werden. Ihren Einsatz möchte man aus Gründen des Umweltschutzes gerne vermeiden. Kalium- und Ammoniumpersulfat sind Polymerisationsinitiator und Salz zugleich.

In der DE-PS 2432983 wird als polymeres Hilfsmittel ein Polyethylenoxid mit dem Molekulargewicht 20000 vorgeschlagen. Dieses soll erst dann zugesetzt werden, wenn mindestens 50 Massen-% der Monomeren umgesetzt sind. Andernfalls wird die Polymerisationsgeschwindigkeit stark verlangsamt und tritt Krustenbildung auf. Als Salz wird Kaliumchlorid genannt. Nachteilig ist, daß bei hohem Monomer/Wasser-Mengenverhältnis bei einem Monomerumsatz von ca. 20 bis 40 Massen-% ein Viskositätsmaximum beobachtet wird, so daß das Verfahren schwer beherrschbar ist. Ein hohes Monomer/Wasser-Mengenverhältnis wird aus wirtschaftlichen Gründen angestrebt. In einem Vergleichsversuch wird das Polyethylenoxid mit dem Molekulargewicht 20000 vor der Polymerisation zugesetzt.

Die Polyethylenoxide und Ethylenoxid/Propylenoxid-Copolymerisate des geschilderten Standes der Technik sind offenbar unverzweigt.

In der DE-OS 2222176 werden als polymere Hilfsmittel, welche vor der Polymerisation zugesetzt werden, u. a. Polyvinylalkohol, partiell hydrolysiertes Polyvinylacetat, Polyvinylpyrrolidon, Polyethylenoxid, Polypropylenoxid und Ethylenoxid/Propylenoxid-Copolymerisate vorgeschlagen. Bevorzugt sind Reaktionsprodukte aus einem Polyethylenoxid und einem durch Umsetzung von Epichlorhydrin mit einem mehrwertigen Phenol erhaltenen "Polyepoxid". In den Beispielen wird eine "Polyoxyäthylenglykolverbindung" mit dem Molekulargewicht 20 000 besonders hervorgehoben. Nähere Angaben zur Struktur dieser Verbindung oder über ein Verfahren zu ihrer Herstellung fehlen. Berücksichtigt man die diesbezüglichen Angaben in der Beschreibung, so scheidet die Herstellung durch Reaktion eines Polyethylenoxids, d. h. eines bifunktionellen Alkohols, mit einem drei- oder mehrfunktionellen Epoxid aus, da eine vernetzte Polyethylenoxidverbindung resultieren würde, welche nicht die Bedingung der hinreichenden Wasserlöslichkeit erfüllen würde und daher als polymeres Hilfsmittel ungeeignet wäre. Es ist anzunehmen, daß die Polyethylenoxidverbindung durch Reaktion eines Polyethylenoxids mit einem bifunktionellen Epoxid erhalten wurde und im wesentlichen unverzweigt ist. Beispielsweise könnte die Polyethylenoxidverbindung durch Reaktion eines Polyethylenoxids mit dem Molekulargewicht 5000 mit einem Diepoxid bei einem Molverhältnis von vier zu drei erhalten sein. Je nach der Breite der Molekulargewichtsverteilung des eingesetzten Polyethylenoxids dürfte die Polyethylenoxidverbindung eine mehr oder weniger breite Molekulargewichtsverteilung aufweisen. Im Beispiel 4 wird über eine Versuchsreihe mit unterschiedlichen Elektrolytzusätzen berichtet. Es wird festgestellt, daß der Elektrolytzusatz (Salzzusatz) zusätzlich zum Kaliumperoxodisulfat keinen Einfluß auf die Teilchengröße hat.

Mit dem Verfahren der DE-OS 2222176 ist es schwierig, großteilige und zugleich koagulatarme Dispersionen herzustellen.

Aus den DE-PSS 1770934 und 2002094 sind Verfahren zur Herstellung großteiliger, carboxylierter Synthesekautschukdispersionen in Batch-Fahrweise bekannt, welche nicht dem Oberbegriff des Patentanspruchs 1 entsprechen, insofern als das polymere Hilfsmittel nicht während der Polymerisation zugegen ist, sondern erst nach der Polymerisation zugesetzt wird. Das Hilfsmittel ist ein oxidiertes Polyethylenoxid. Es wird in einer vergleichsweise großen Menge (beispielsweise 0,1 Massenteile, bezogen auf 100 Massenteile Feststoff) zugesetzt. Nachteilig ist, daß nach der Polymerisation ein zusätzlicher Verfahrensschritt erforderlich ist, daß die Elektrolytstabilität der Dispersionen für spezielle Anwendungen unzureichend ist und daß die Dispersionen eine Teilchengrößenverteilung aufweisen, die nicht immer den Anforderungen der Praxis entspricht. Eine typische Dispersion weist ein Uneinheitlichkeit U von 0,18 auf. U ist wie folgt definiert :

2

$$U = \frac{dv}{dn} - 1$$ ; dv ist der volumenmittlere Durchmesser ; dn ist derzahlenmittlere Durchmesser. Die mittleren Durchmesser werden durch ein elektronenmikroskopisches Meßverfahren in Verbindung mit DIN 66 141 bestimmt. Dispersionen mit enger, monomodaler oder weniger enger, bimodaler Teilchengrößenverteilung können nach diesem Stand der Technik nicht hergestellt werden. Die Teilchen sind in der Regel unrund, d. h. sie weisen eine unregelmäßige Gestalt auf. Dies wirkt sich nachteilig auf die Lagerstabilität der Dispersionen aus, indem die Viskosität bei der Lagerung in unerwünschter Weise ansteigt.

Aus der DE-OS 2323547 ist ein weiteres mit ähnlichen Nachteilen behaftetes Verfahren zur Herstellung großteiliger Synthesekautschukdispersionen in Batch-Fahrweise bekannt, bei welchem das polymere Hilfsmittel erst nach der Polymerisation zugesetzt wird. Das Hilfsmittel soll in einer vergleichsweise großen Menge (0,01 bis 5, vor zugsweise 0,02 bis 1,0 Massenteile, bezogen auf 100 Massenteile Feststoff) zugesetzt werden. Ein typisches Hilfsmittel ist ein ethoxyliertes Rizinusöl mit dem Molekulargewicht 9600.

Die Aufgabe der Erfindung ist es, die geschilderten Mängel zu überwinden. Das bereitzustellende Verfahren soll die folgenden Anforderungen erfüllen.

Es soll flexibel sein, d. h. es soll ermöglichen, gezielt die Teilchengröße der Dispersionen unabhängig von anderen Zielgrößen, wie beispielsweise dem Molekulargewicht der Polymerisate, einzustellen, und zwar den volumenmittleren Durchmesser dv und die Teilchengrößenverteilung. Insbesondere wird eine enge, monomodale oder eine weniger enge, bimodale Verteilung angestrebt. Im letzteren Fall sollen die beiden Gruppen von Teilchen sich hinsichtlich ihrer Größe wesentlich unterscheiden. [P. H. Johnson et al., Rubber World 139 (1958) 227 ; J. H. Waterman et al., J. Inst. Rubber Ind. 1 (1967) 168]. Die Teilchen sollen rund sein. Die Polymerisationszeiten sollen vergleichsweise kurz sein. Bei hohem Monomer/Wasser-Mengenverhältnis soll während der Polymerisation kein Viskositätsmaximum auftreten. Der Zusatz eines Phosphatesters als anionischer Emulgator soll nicht obligatorisch, sondern fakultativ sein. Im Falle der Herstellung carboxylierter Kunststoffdispersionen sollen diese elektrolytstabil sein.

Es erschien nicht möglich, großteilige, wäßrige Kunststoffdispersionen herzustellen, die die gestellten Anforderungen erfüllen.

Es wurde jetzt ein Verfahren gefunden, das diesen Anforderungen gerecht wird und in Anspruch 1 angegeben ist. Besonders vorteilhafte Varianten sind in den Unteransprüchen 2 bis 10 angegeben.

Der Gegenstand der Erfindung ist somit ein Verfahren zur Herstellung großteiliger, wäßriger Kunststoffdispersionen durch Emulsionspolymerisation von radikalisch polymerisierbaren Monomeren in Gegenwart eines anionischen Emulgators, eines nichtionischen, wasserlöslichen polymeren Hilfsmittels, eines freie Radikale bildenden Polymerisationsinitiators und üblicher Polymerisationshilfsmittel. Das Verfahren ist durch die folgenden zusätzlichen Merkmale charakterisiert :

Vor der Polymerisation sollen, bezogen auf 100 Massenteile des (der) Monomeren, 0,00001 bis < 0,02, insbesondere 0,0001 bis 0,008 Massenteile eines verzweigten Polyethylenoxids mit $\overline{M}w = $ 4000 bis 19000, insbesondere 4500 bis 18000, zugesetzt werden. Außerdem gilt die Vorschrift, daß zu Beginn der Polymerisation wasserlösliches Alkali- und/oder Ammoniumsalz zugegen ist, mit der Maßgabe, daß in der wäßrigen Phase, bezogen auf 1 l derselben, 1 bis 250, insbesondere 10 bis 100 mmol nicht emulgatorgebundene Alkali- und/oder Ammoniumionen vorliegen.

Darüber hinaus ist zu beachten, daß die gesamte Polymerisation in Batch-Fahrweise durchgeführt oder die Polymerisation in Batch-Fahrweise begonnen und nach der Teilchenbildungsphase unter üblichen Bedingungen zur Pfropfpolymerisation, wobei die Bildung neuer Teilchen vermieden wird, fortgeführt und zu Ende geführt wird. Die Teilchenbildungsphase ist in der Regel < 15, insbesondere < 10 min nach Beginn der Polymerisation beendet.

Im Falle des Wechsels der Fahrweise werden in der Regel > 10 Massen-% der gesamten Monomeren zur Batch-Fahrweise vorgelegt. In der Regel erfolgt der Wechsel der Fahrweise nicht unmittelbar nach der Teilchenbildungsphase, welche unter Umständen nicht einmal 1 min dauert, sondern erst nach einem Umsatz von > 50 Massen-% der vorgelegten Monomeren.

Die semikontinuierliche Emulsionszulauffahrweise liegt vor, wenn nur ein Teil des Emulgators im Reaktor vorgelegt und Monomer, Initiator und der Rest des Emulgators im Verlauf der Polymerisation unter Berücksichtigung der zulässigen Füllhöhe des Reaktors zugegeben wird.

Die semikontinuierliche Monomerzulauffahrweise liegt vor, wenn der gesamte Emulgator im Reaktor vorgelegt und Monomer sowie gegebenenfalls Initiator im Verlauf der Polymerisation unter Berücksichtigung der zulässigen Füllhöhe des Reaktors zugegeben wird.

Diese Definitionen [vgl. H. Fikentscher et al., Angew. Chem. 72 (1960), Seite 860, rechte Spalte, letzter Absatz, bis Seite 861, linke Spalte, Mitte] gelten in der Weise, daß in der Vorlage zu Beginn der Zulauffahrweise das in Batch-Fahrweise nach der Teilchenbildungsphase resultierende Gemisch vorliegt.

Wesentliches Element des Verfahrens ist ein sehr wirksames, die Teilchengröße steuerndes System, welches den anionischen Emulgator, das verzweigte Polyethylenoxid in bemerkenswert geringer Menge und die überraschend wirksamen, nicht emulgatorgebundenen Alkali- und/oder Ammoniumionen umfaßt.

Versuchsreihen in Anlehnung an den Stand der Technik mit Ammoniumperoxodisulfat als Polymerisationsinitiator, wobei die Initiatormenge variiert wurde, zeigten, daß mit steigender Initiatormenge erwartungsgemäß dv abnahm [J. Chem. Phys. 16 (1948) 592 ff.], während bei erfindungsgemäßen Versuchsreihen überraschenderweise der umgekehrte Trend beobachtet wurde. Diese Beobachtungen kann man in der Weise interpretieren, daß den nicht emulgatorgebundenen Alkali- und Ammoniumionen im Verfahren der Erfindung eine wesentliche, vom Stand der Technik abweichende Bedeutung im Hinblick auf die Ein stellung von dv zukommt. Dadurch eröffnet sich die Möglichkeit, dv unabhängig von anderen Zielgrößen, wie beispielsweise dem Molekulargewicht der Polymerisate, einzustellen.

Die Komponenten des die Teilchengröße steuernden Systems der Erfindung stehen somit in einem funktionalen Zusammenhang. Im oben geschilderten Stand der Technik ist dagegen kein vergleichbares, die Teilchengröße steuerndes System mit in funktionalem Zusammenhang stehenden Komponenten vorhanden. Die Erfindung beinhaltet also eine grundsätzlich neue Lehre mit erheblicher Tragweite.

Die verzweigten Polyethylenoxide werden in der Regel als Lösung in einem unverzweigten Polyethylenoxid eingesetzt, d. h. sie müssen nicht aus den beispielsweise bei der Oxidation von Polyethylenoxid oder bei der Ethoxylierung von Pentaerythrit oder Rizinusöl erhaltenen Gemischen von unverzweigtem und verzweigtem Polyethylenoxid, beispielsweise durch Fällungsfraktionierung, abgetrennt werden. Der Gehalt des Gemisches an verzweigtem Polyethylenoxid und dessen gewichtsmittleres Molekulargewicht ($\overline{\text{M}}$w) werden durch gelchromatografische Analyse bestimmt. In der Regel weist das unverzweigte Polyethylenoxid ein geringeres gewichtsmittleres Molekulargewicht auf als das verzweigte Polyethylenoxid der gleichen Probe. Das Gemisch besteht in der Regel zu 15 bis 90 Massen-% aus dem verzweigten Polyethylenoxid. Die gelchromatografische Analyse wird mit Tetrahydrofuran als Lösemittel, mit einem heterogen vernetzten Polystyrolgel mit einer Teilchengröße von 5 µm als Säulenmaterial, mit Hilfe eines Differentialrefraktometers als Detektor und mit unverzweigten Polyethylenoxiden als Eichsubstanzen durchgeführt.

Die verzweigten Polyethylenoxide können unregelmäßig oder regelmäßig verzweigt sein. Sie können beispielsweise eine sternförmige oder kammartige Struktur aufweisen. Sie weisen vorzugsweise keinen hydrophoben Rest mit mehr als 20 C-Atomen auf.

Vorzugsweise wird ein oxidiertes Polyethylenoxid zugesetzt (Patentanspruch 3). Seine Menge beträgt in der Regel 0,001 bis 0,05, insbesondere 0,0015 bis 0,02 Massenteile, bezogen auf 100 Massenteile Monomer. Das oxidierte Polyethylenoxid wird in grundsätzlich bekannter Weise durch Oxidation eines geeigneten Polyethylenoxids erhalten (DE-PS 1213984). Dabei wird ein oxidiertes Polyethylenoxid erhalten, welches ein verzweigtes Polyethylenoxid gemäß Patentanspruch 1 enthält. Es its ein Gemisch von verzweigtem (erfindungsgemäß wirksamem) und unverzweigtem Polyethylenoxid. Das verzweigte Polyethylenoxid ist ein Beispiel für ein unregelmäßig verzweigtes Polyethylenoxid. Das oxidierte Polyethylenoxid wird im allgemeinen durch Luftoxidation eines Polyethylenoxids erhalten, das ein gewichtsmittleres Molekulargewicht $\overline{\text{M}}$w im Bereich von 2500 bis 6500, insbesondere 3000 bis 5500, aufweist und dessen Uneinheitlichkeit (U = $\overline{\text{M}}$w/$\overline{\text{M}}$n − 1) 0,1 bis 0,3 vorzugweise 0,15 bis 0,25, beträgt. $\overline{\text{M}}$w und $\overline{\text{M}}$n des zur Oxidation eingesetzten Polyethylenoxids werden durch gelchromatografische Analyse unter den oben angegebenen Bedingungen bestimmt. Das oxidierte Polyethylenoxid weist einen Carbonylgruppengehalt von 0,1 bis 2,0, insbesondere 0,5 bis 2,0 Massen-%, auf. Der Carbonylgruppengehalt wird durch IR-Analyse bei der Bande 5,8 µm bestimmt.

Regelmäßig verzweigte Polyethylenoxide mit sternförmiger Struktur erhält man beispielsweise durch Umsetzung einer niedermolekularen, wenigstens drei, insbesondere wenigstens vier ethoxylierbare, funktionelle Gruppen aufweisenden Verbindung mit Ethylenoxid, das bis zu 30 Mol-% durch Propylenoxid ersetzt sein kann (Patentansprüche 4 und 5). Geeignete ethoxylierbare, funktionelle Gruppen sind beispielsweise primäre und mit Einschränkungen auch sekundäre, alkoholische Hydroxylgruppen, phenolische Hydroxylgruppen und Carboxylgruppen. Geeignete ethoxylierbare Verbindungen sind beispielsweise Trimethylolpropan, Rizinusöl, Trihydroxybenzole, Trimesinsäure, Pentaerythrit, Pyromellithsäure, Gallussäure und Hexite.

Geeignete, regelmäßig verzweigte Polyethylenoxide mit sternförmiger Struktur können auch entsprechend den folgenden Vorgehensweisen erhalten werden. Sie liegen jeweils als Lösung in unverzweigtem Polyethylenoxid vor. Einer Isolierung der verzweigten Polyethylenoxide bedarf es nicht.

Aus einem niedermolekularen, wenigstens drei umesterbare Alkoxygruppen aufweisenden Silan oder Siloxan oder einer niedermolekularen, wenigstens drei Isocyanatgruppen oder umesterbare Carbonsäurealkylestergruppen aufweisenden Verbindung, wobei die den Carbonsäurealkylestergruppen zugrundeliegenden Carboxylgruppen über einen organischen Rest miteinander verbunden sind, einerseits und einem unverzweigten Polyethylenoxidmonoalkylether, bei dem das zugrundeliegende Ethylenoxid bis zu 30 Mol-% durch Propylenoxid ersetz sein kann, andererseits wird ein Reaktionsprodukt erhalten. Dieses ist als Zusatz geeignet (Patentanspruch 6).

4

Bevorzugt ist ein Reaktionsprodukt aus Tetraethoxysilan oder aus dem Trimerisierungsprodukt von Isophorondiisocyanet oder aus Trimesinsäuretrimethyl- oder Trimesinsäuretriethylester, Trimellithsäuretrimethyl- oder Trimellithsäuretriethyleste ; einerseits und Polyethylenoxidmrnoethylether andererseits (Patentanspruch 7).

Nach dem Verfahren der Erfindung können Homo- und Copolymerisate der technisch interessanten, radikalisch polymerisierbaren Monomeren hergestellt werden. Die Monomeren können monoolefinisch ungesättigt sein, wie beispielsweise Vinylchlorid, Vinylidenchlorid, Vinylester, monoalkenylaromatische Verbindungen, Vinylpyridin, (Meth)acrylnitril, (Meth)acrylsäureester und alpha,beta-olefinisch ungesättigte Carbonsäuren. Die Monomeren können zur Gruppe der aliphatischen, konjugierten Diene gehören, wie beispielsweise 1,3-Butadien und Isopren. Der Anteil der ungesättigten Carbonsäuren im Monomerengemisch ist in der Regel nicht höher als 30 Massen-%. Die Polymerisate können durch einen geringen Anteil eines anderen Monomers, wie beispielsweise (Meth)acrylamid, modifiziert sein.

Bei einem bevorzugten Verfahren besteht das Monomerengemisch zu 25 bis 68,5 Massen-% aus hartmachendem Monomer aus der Gruppe, bestehend aus Styrol, (Meth)acrylnitril und Methylmethacrylat, zu 30 bis 70 Massen-% aus weichmachendem Monomer aus der Gruppe, bestehend aus 1,3-Butadien, ($C_4$- bis $C_8$-Alkyl)(meth)acrylat und zu 1,5 bis 5 Massen-% aus einer alpha,beta-olefinisch ungesättigten Carbonsäure aus der Gruppe, bestehend aus (Meth)acrylsäure, Itaconsäure, Fumarsäure und den Halbestern der beiden letzteren. Die erhaltenen Copolymerisatdispersionen haben eine minimale Filmbildungstemperatur von < 100 °C. Sie sind elektrolytstabil und eignen sich vorteilhaft zur Herstellung von Bestrichmaterialien für Teppiche (Vorstrich) und Papier.

Als Emulgatoren kommen die üblichen anionischen Emulgatoren infrage, insbesondere
— Sulfonsäuren, wie Alkylsulfonsäuren, Alkylarylsulfonsäuren, $C_{13}$- bis $C_{18}$-Sulfobernsteinsäureester und deren Alkali- und Ammoniumsalze ;
— $C_{10}$- bis $C_{20}$-Schwefelsäurehalbester und deren Alkali- und Ammoniumsalze ;
— Fettseifen und Harzseifen.

Die drei Gruppen von Emulgatoren kommen infrage, wenn im alkalischen pH-Bereich polymerisiert werden soll. Die beiden ersten Gruppen kommen infrage, wenn im sauren pH-Bereich polymerisiert werden soll, insbesondere bei der Herstellung von carboxylierten Dispersionen.

Der Polymerisationsinitiator ist ein üblicher, Radikale bildender Polymerisationsinitiator. Er kann ein organisches Peroxid oder Hydroperoxid, wie beispielsweise Cumolhydroperoxid, in Verbindung mit einem in Wasser dispergierbaren Reduktionsmittel, wie beispielsweise Eisen-II-sulfoxylatkomplex (Initiator vom Redoxtyp) oder ein anorganisches Peroxid, wie beispielsweise Kaliumperoxodisulfat und Natriumperborat, oder Wasserstoffperoxid sein. Mit dem Initiator vom Redoxtyp kann die Polymerisation bei einer Temperatur zwischen 0 und 50°C durchgeführt werden. Mit dem anorganischen Peroxid wird die Polymerisation im allgemeinen zwischen 50 und 80°C durchgeführt.

Als Polymerisationsinitiator wird vorzugsweise ein Persulfat zugesetzt. Seine Menge beträgt in der Regel 0,1 bis 2,5, insbesondere 0,1 bis 1,5 Massenteile, bezogen auf 100 Massenteile Monomer (Patentanspruch 9).

Bemerkenswert ist, daß bei der Persulfat-initiierten Polymerisation ein zum Stand der Technik entgegengesetzter Trend in der Abhängigkeit des volumenmittleren Teilchendurchmessers dv von der Polymerisationstemperatur festgestellt wird. Bei einer vergleichsweise hohen Temperatur erhält man einen größeren Wert für dv als bei einer weniger hohen Temperatur.

Mit steigender Einsatzmenge des Initiators nimmt die erforderliche Polymerisationszeit ab und sinkt das Molekulargewicht des Polymerisates.

Mit der Emulgatormenge kann, gegebenenfalls in Verbindung mit der Persulfatmenge, die Teilchengrößenverteilung der Dispersionen gesteuert werden. Im Falle der Herstellung carboxylierter Dispersionen erhält man in der Regel mit einer Emulgatormenge von < 2 Massenteilen unabhängig von der Persulfatmenge eine enge, monomodale und mit einer Emulgatormenge von größer/gleich 2 Massenteilen in Verbindung mit einer Persulfatmenge von größer/gleich 0,8 Massenteilen eine weniger enge, bimodale Verteilung. Die Regel gilt mit höheren Grenzen für die Herstellung von nicht carboxylierten Dispersionen. Die Grenzen können durch einfache, orientierende Versuche ermittelt werden.

Als Alkali- und Ammoniumsalze kommen beispielsweise die Chloride, Sulfate, Persulfate, Perborate, Carbonate, Phosphate und auch die Salze üblicher Polymerisationshilfsmittel, wie beispielsweise die als Komplexbildner dienenden Ethylendiamintetraacetate und die als Dispergiermittel dienenden Salze der Kondensationsprodukte aus Naphthalinsulfonsäure und Formaldehyd, der Poly-2-acrylamido-2-methylpropansulfonsäure (DE-AS 2540468) und der Polysulfonsäuren eines Alkans mittlerer Kettenlänge (EP-PS 0036904) infrage.

Außer den Polymerisationshilfsmitteln, deren Alkali- und Ammoniumionen in der Gesamtbilanz der nicht emulgatorgebundenen Alkali- und Ammoniumionen berücksichtigt werden müssen, können weitere übliche Polymerisationshilfsmittel zugesetzt werden, beispielsweise Regler, wie Dodecylmercaptan.

Die Polymerisation wird normalerweise bis zu 100 Massen-% Umsatz durchgeführt. Sie kann jedoch auch bei einem weniger hohen Umsatz abgebrochen werden. Die Restmonomeren werden dann in einem separaten Verfahrensschritt zurückgewonnen.

Zur Herstellung der Dispersionen kann ein druckfester Rührkessel verwendet werden, der zur Abführung der Polymerisationswärme mit einem Kühlmantel oder sonstigen bekannten Kühlvorrichtungen ausgestattet ist. Im Falle der Polymerisation in Batch-Fahrweise wird der Polymerisationskessel nach Evakuieren und Stickstoffspülung in üblicher Weise mit Wasser, Emulgator, Monomeren und den Hilfsmitteln gefüllt. Das Monomer/Wasser-Mengenverhältnis wird vorzugsweise so eingestellt, daß sich nach der Polymerisation ein Feststoffgehalt von 30 bis 55 Massen-% ergibt. Dann wird die Polymerisation durch Zugabe des Polymerisationsinitiators und durch Erhöhung der Temperatur gestartet. Die Polymerisationszeit beträgt in der Regel 8 bis 15, vorzugsweise 8 bis 12 Stunden. Wenn bei der Herstellung carboxylierter Dispersionen im sauren pH-Bereich polymerisiert wird, wird nach Beendigung der Polymerisation in der Regel mit Ammoniak auf einen pH-Wert von 8,5 bis 9,0 eingestellt. Die erhaltenen Dispersionen können auf bestimmten Einsatzgebieten direkt, d. h. ohne Veränderung des Feststoffgehaltes und der Viskosität, eingesetzt werden. Manche Einsatzgebiete erfordern das Eindampfen der oben erhaltenen Dispersion auf den gewünschten Feststoffgehalt. Die Dispersion kann bis auf die Viskosität 1200 mPa s, gemessen bei Raumtemperatur mit einem Brookfield-Viskosimeter (Spindel 3, 30 Upm), eingedampft werden, wobei je nach vorliegender Teilchengröße und Teilchengrößenverteilung ein Feststoffgehalt von 55 bis 70 Massen-% resultiert. Das Eindampfen erfolgt in der Regel bei 20 bis 60°C unter Rühren im Vakuum. Solche konzentrierten Dispersionen eignen sich im Falle carboxylierter Synthesekautschukdispersionen vorteilhaft zur Herstellung von Bestrichmaterialien für Teppiche (Vorstrich) und Papier. Nicht carboxylierte Synthesekautschukdispersionen eignen sich zur Teppichrückenschaumbeschichtung und zur Herstellung von Schaumformteilen. Polystyroldispersionen eignen sich als Verstärker für Kautschukdispersionen.

Die Erfindung wird durch die folgenden Beispiele erläutert. Darin bedeuten Prozent (%) Massenprozent und Teile (T.) Massenteile. Die nicht erfindungsgemäßen Vergleichsbeispiele und Vergleichsdispersionen werden mit großen Buchstaben bezeichnet.

Vorschrift zur Bestimmung der Elektrolytstabilität der Dispersionen

Eine Reihe von wäßrigen NaCl-Lösungen mit ansteigender Konzentration, beginnend mit 1,5% und endend mit 25%, wurde hergestellt, wobei die Konzentration von Lösung zu Lösung um 0,5% anstieg.

In einem 150-ml-Becherglas wurden 50 ml einer der NaCl-Lösungen vorgelegt. Mit einer 1-ml-Meßpipette wurde 1 Tropfen der zu prüfenden Dispersion zu der durch Schütteln bewegten NaCl-Lösung gegeben. Die Dispersion ist stabil, wenn sich kein Koagulat bildet.

Angegeben wird die NaCl-Lösung mit der höchsten Konzentration, gegen welche die Dispersion stabil ist.

Beispiele 1 bis 9 und A bis F

In den Beispielen wurden als polymere Hilfsmittel ein unverzweigtes Polyethylenoxid (PEO, $\overline{M}w$ = 3140, U = 0,21), ein aus diesem durch Luftoxidation gemäß DE-PS 1213984 erhaltenes, oxidiertes Polyethylenoxid (PEOox, Carbonylgruppengehalt : 1,0%) und eine im Handel erhältliche Polyethylenoxidverbindung (PEOverb, $\overline{M}w$ = 20000, vgl. DE-OS 2222176) eingesetzt.

PEOox besteht zu 80% aus einem unverzweigten Polyethylenoxid und zu 20% aus einem verzweigten Polyethylenoxid mit $\overline{M}w$ = 5240 gemäß der Erfindung.

PEOverb besteht zu 70% aus einem unverzweigten Anteil und zu 30% aus einem verzweigten Anteil mit $\overline{M}w$ = 25000.

Beispiel 1

Herstellung der carboxylierten SBR-Dispersion 1

In einem 40-l-Polymerisationskessel wurden 150 Teile vollentsalztes Wasser, 0,5 Teile eines handelsüblichen Natrium-($C_{16}$- bis $C_{18}$-Paraffin)-sulfonates, 0,004 Teile PEOox, 0,29 Teile Ammoniumsulfat, 0,05 Teile des Tetranatriumsalzes der Ethylendiamintetraessigsäure, 2,5 Teile Acrylsäure, 57,5 Teile Styrol, 0,75 Teile tert.-Dodecylmercaptan und 40 Teile 1,3-Butadien zusammengegeben. Dabei stellte sich der pH-Wert 2,3 ein. Der Ansatz wurde auf 50°C aufgeheizt. Dann wurde eine wäßrige Lösung von 0,2 Teilen Ammoniumperoxodisulfat hinzugegeben. Die Temperatur wurde innerhalb von 4 Stunden auf 80°C erhöht und die Polymerisation während weiterer 6 Stunden zu Ende geführt. Dann wurde mit Ammoniak der pH-Wert 8,5 eingestellt. Die erhaltene Dispersion war koagulatfrei und hatte einen Feststoffgehalt von ca. 40%. Sie wurde konzentriert bis sich eine Viskosität von 1200 mPa s einstellte. Der Feststoffgehalt war dann 60%. Die Dispersion wurde wie in der Tabelle angegeben charakterisiert.

Beispiel 2

Herstellung der carboxylierten SBR-Dispersion 2

Es wurde wie im Beispiel 1 verfahren, jedoch wurde kein Ammoniumsulfat zugesetzt und die Ammoniumperoxodisulfatmenge auf 0,8 Teile erhöht. Bei gleicher Menge der nicht emulgatorgebundenen Ionen wurde eine gute Übereinstimmung hinsichtlich dv und Feststoffgehalt bei 1200 mPa s festgestellt.

Beispiele 3 und 4

Herstellung der carboxylierten SBR-Dispersionen 3 und 4

Es wurde wir im Beispiel 2 verfahren, jedoch die Ammoniumperoxodisulfatmenge auf 0,5 Teile bzw. 1,0 Teile eingestellt. Die beiden Beispiele verdeutlichen die starke Wirksamkeit der nicht emulgatorgebundenen Ionen hinsichtlich der Einstellung von dv und des Feststoffgehaltes bei 1200 mPa s.

Beispiele A bis C

Herstellung der carboxylierten SBR-Dispersionen A bis C

Es wurde wie im Beispiel 2 verfahren, jedoch statt 0,004 Teilen PEOox 0,000001 Teile PEOverb zugesetzt und die Ammoniumperoxodisulfatmenge auf 0,2 bzw. 0,5 bzw. 0,8 Teile eingestellt. Die Beispiele verdeutlichen, daß den nicht emulgatorgebundenen Ionen keine Bedeu tung hinsichtlich der Einstellung von dv und des Feststoffgehaltes der Dispersion bei 1200 mPa s zukommt.

Beispiele 5 und 6

Herstellung der carboxylierten SBR-Dispersionen 5 und 6

Es wurde wie im Beispiel 2 verfahren, jedoch die Paraffinsulfonatmenge auf 2,7 Teile und die Styrolmenge auf 77,5 Teile erhöht, die Butadienmenge auf 20 Teile erniedrigt und die Ammoniumperoxodisulfatmenge auf 0,3 bzw. 0,5 Teile eingestellt.

Beispiele D und E

Herstellung der carboxylierten SBR-Dispersionen D und E

Es wurde wie im Beispiel 3 verfahren, jedoch wurden statt 0,004 Teilen PEOox vor der Polymerisation 0,008 Teile PEOox nach einem Monomerumsatz von 42 bzw. 78% zugesetzt.

Beispiel F

Herstellung der carboxylierten SBR-Dispersion F

Es wurde wie im Beispiel 3 verfahren, jedoch wurden statt 0,004 Teilen PEOox 0,008 Teile PEO zugesetzt.

Beispiele 7 und 8

Herstellung der SBR-Dispersionen 7 und 8

Es wurde wie im Beispiel 2 verfahren, jedoch die PEOox-Menge auf 0,006 Teile erhöht ; statt 0,5 Teilen Paraffinsulfonat wurden 2,7 Teile Kaliumoleat zugesetzt ; die Acrylsäure wurde weggelassen, die Styrolmenge auf 80 Teile erhöht und die Butadienmenge auf 20 Teile erniedrigt ; die Ammoniumperoxodisulfatmenge wurde auf 0,8 bzw. 1,0 Teile eingestellt.

Beispiel 9

Herstellung der SBR-Dispersion 9

In einem 40-I-Polymerisationskessel wurden 52 Teile vollentsalztes Wasser, 2,7 Teile Kaliumoleat, 0,48 Teile des Natriumsalzes eines Kondensationsproduktes aus Naphthalinsulfonsäure und Formaldehyd, 0,006 Teile PEOox, 0,29 Teile Kaliumchlorid, 31 Teile Styrol, 0,08 Teile tert.-Dodecylmercaptan und 69 Teile 1,3-Butadien zusammengegeben. Nach dem Abkühlen auf 10°C wurde eine wäßrige Lösung von 0,05 Teilen Natriumformaldehydsulfoxylat, von 0,026 Teilen des Tetranatriumsalzes der Ethylendiamintetraessigsäure und von 0,005 Teilen Eisen-II-sulfatheptahydrat zugegeben. Nach Einstellung des pH-Wertes auf 10,8 wurden 0,056 Teile Pinanhydroperoxid zugesetzt. Die Temperatur wurde innerhalb von 4 Stunden auf 50°C erhöht und die Polymerisation während weiteren 8 Stunden fortgeführt. Dann wurde die Polymerisation bei einem Monomerumsatz von 70% durch Zugabe von 0,039 Teilen Diethylhydroxylamin (85%ig) gestoppt. Die erhaltene Dispersion war koagulatfrei. Die Restmonomeren wurden abgetrennt. Die Dispersion wurde konzentriert bis sich eine Viskosität von 1200 mPa s einstellte. Der Feststoffgehalt war dann 63%. Die Dispersion wurde wie in der Tabelle angegeben charakterisiert.

Beispiele 10 bis 12

In den Beispielen wurden als polymere Hilfsmittel ein ethoxyliertes Pentaerythrit (PETethox) und ein ethoxyliertes Rizinusöl (RIZethox) eingesetzt.

PETethox besteht zu 30% aus einem unverzweigten Polyethylenoxid und zu 70% aus einem verzweigten Polyethylenoxid mit $\overline{M}w = 15400$.

RIZethox besteht zu 20% aus einem unverzweigten Polyethylenoxid und zu 80% aus einem verzweigten Polyethylenoxid mit $\overline{M}w = 8100$.

Beispiel 10

Herstellung der carboxylierten SBR-Dispersion 10

Es wurde wie im Beispiel 1 verfahren, jedoch statt 0,004 Teilen PEOox 0,0046 Teile PETethox zugesetzt.

Beispiele 11 und 12

Herstellung der carboxylierten SBR-Dispersionen 11 und 12

Es wurde wie im Beispiel 2 bzw. 3 verfahren ; statt 0,004 Teile PEOox wurden jedoch 0,004 Teile RIZethox zugesetzt.

Die Dispersionen 1 bis 12 weisen eine enge, monomodale Teilchengrößenverteilung auf.

EP 0 330 865 B1

Tabelle

Herstellung und Charakterisierung der Dispersionen 1 bis 12 und A bis F

| Dispersion | anionischer Emulgator (T./100 T. Monomer) Paraffinsulfonat | Oleat | polymeres Hilfsmittel (verzweigter Anteil) (T./100 T. Monomer) | | $[Na^+]+[K^+]+[NH_4^+]$ nicht emulgatorgebunden (mmol/l) | PM-zeit (h) | 0 (mN/m) | dv (nm) | U | Feststoffgehalt bei 1200 mPa s (%) | stabil gegen NaCl-Lösung der Konz. (%) |
|---|---|---|---|---|---|---|---|---|---|---|---|
| 1 | 0,5 | | 0,004 | (0,0008) PEOox | 54 | 10 | 58 | 240 | 0,007 | 60 | 25 |
| 2 | 0,5 | | 0,004 | (0,0008) PEOox | 54 | 13 | 48 | 230 | 0,009 | 60 | 25 |
| 3 | 0,5 | | 0,004 | (0,0008) PEOox | 33 | 7 | 57 | 160 | 0,01 | 55 | 25 |
| 4 | 0,5 | | 0,004 | (0,0008) PEOox | 69 | 16 | 40 | 283 | 0,007 | 65 | 25 |
| A | 0,5 | | 0,000001 | (0,0000003) PEOverb | 15 | 8 | 64 | 125 | 0,15 | 55 | 12 |
| B | 0,5 | | 0,000001 | (0,0000003) PEOverb | 33 | 8 | 61 | 109 | 0,02 | 52 | 10 |
| C | 0,5 | | 0,000001 | (0,0000003) PEOverb | 54 | 7 | 60 | 113 | 0,02 | 53 | 15 |
| 5 | 2,7 | | 0,004 | (0,0008) PEOox | 21[3] | 7 | 43 | 131 | 0,01 | 55 | 25 |
| 6 | 2,7 | | 0,004 | (0,0008) PEOox | 33[3] | 7 | 34 | 189 | 0,01 | 59 | 25 |

Tabelle - Fortsetzung

| Dispersion | anionischer Emulgator (T./100 T. Monomer) | | polymeres Hilfsmittel (verzweigter Anteil) (T./100 T. Monomer) | | | $[Na^+]+[K^+]+[NH_4^+]$ nicht emulgatorgebunden (mmol/l) | PM-zeit (h) | O (mN/m) | dv (nm) | U | Feststoffgehalt bei 1200 mPa s (%) | stabil gegen NaCl-Lösung der Konz. (%) |
|---|---|---|---|---|---|---|---|---|---|---|---|---|
| | Paraffinsulfonat | Oleat | | | | | | | | | | |
| D | 0,5 | | 0,008 | (0,0016) | PEOox[1] | 33 | 6 | 65 | 91 | 0,007 | 49 | 7 |
| E | 0,5 | | 0,008 | (0,0016) | PEOox[2] | 33 | 6 | 67 | 92 | 0,007 | 49 | 5 |
| F | 0,5 | | 0,008 | (-) | PEO | 33 | 6 | 66 | 74 | 0,006 | 47 | 4 |
| 7 | | 2,7 | 0,006 | (0,0012) | PEOox | 54 | 9 | 60 | 138 | 0,015 | 56 | 5 |
| 8 | | 2,7 | 0,006 | (0,0012) | PEOox | 69 | 10 | 52 | 194 | 0,02 | 61 | 6 |
| 9 | | 2,7 | 0,006 | (0,0012) | PEOox | 75 | 12 | 52 | 210 | 0,03 | 63 | 4 |
| 10 | 0,5 | | 0,0046 | (0,0032) | PETethox | 54 | 13 | 46 | 231 | 0,009 | 60 | 25 |
| 11 | 0,5 | | 0,004 | (0,0032) | RIZethox | 54 | 10 | 47 | 210 | 0,007 | 60 | 25 |
| 12 | 0,5 | | 0,004 | (0,0032) | RIZethox | 33 | 8 | 56 | 156 | 0,004 | 58 | 25 |

EP 0 330 865 B1

## Tabelle - Fortsetzung

PM-zeit = Polymerisationszeit; O = Oberflächenspannung

1) Das PEOox wurde nach einem Monomerumsatz von 42 % zugesetzt.

2) Das PEOox wurde nach einem Monomerumsatz von 78 % zugesetzt.

3) Der Wert entspricht nur angenähert dem tatsächlichen Wert, da eine geringe, mit dem handelsüblichen Paraffinsulfonat eingetragene NaCl-Menge nicht berücksichtigt wurde.

**Patentansprüche**

1. Verfahren zur Herstellung großteiliger, wäßriger Kunststoffdispersionen durch Emulsionspolymerisation von radikalisch polymerisierbaren Monomeren in Gegenwart eines anionischen Emulgators, eines nichtionischen, wasserlöslichen, polymeren Hilfsmittels, eines freie Radikale bildenden Polymerisationsinitiators und üblicher Polymerisationshilfsmittel, dadurch gekennzeichnet, daß vor der Polymerisation, bezogen auf 100 Massenteile des (der) Monomeren, 0,00001 bis < 0,02 Massenteile eines verzweigten Polyethylenoxids mit $\overline{M}w$ = 4000 bis 19000 zugesetzt werden, zu Beginn der Polymerisation wasserlösliches Alkali- und/oder Ammoniumsalz zugegen ist, mit der Maßgabe, daß in der wäßrigen Phase, bezogen auf 1 l derselben, 1 bis 250 mmol nicht emulgatorgebundene Alkali- und/oder Ammoniumionen vorliegen, und die gesamte Polymerisation in Batch-Fahrweise durchgeführt oder die Polymerisation in Batch-Fahrweise begonnen und nach der Teilchenbildungsphase unter üblichen Bedingungen zur Pfropfpolymerisation, wobei die Bildung neuer Teilchen vermieden wird, fortgeführt und zu Ende geführt wird.

2. Verfahren nach Anspruch 1, dadurch gekennzeichnet, daß die Polymerisation in Batch-Fahrweise begonnen und nach der Teilchenbildungsphase in semikontinuierlicher Emulsionszulauffahrweise oder in semikontinuierlicher Monomerzulauffahrweise fortgeführt und zu Ende geführt wird.

3. Verfahren nach Anspruch 1 oder 2, dadurch gekennzeichnet, daß ein das verzweigte Polyethylenoxid enthaltendes, oxidiertes Polyethylenoxid, das durch Oxidation eines Polyethylenoxids mit $\overline{M}w$ = 2500 bis 6500, insbesondere 3000 bis 5500, erhalten ist und einen Carbonylgruppengehalt von 0,1 bis 2,0, insbesondere 0,5 bis 2,0 Massen-% aufweist, zugesetzt wird.

4. Verfahren nach Anspruch 1 oder 2, dadurch gekennzeichnet, daß ein das verzweigte Polyethylenoxid enthaltendes Reaktionsprodukt aus einer niedermolekularen, wenigstens drei ethoxylierbare, funktionelle Gruppen aufweisenden Verbindung und Ethylenoxid, das bis zu 30 Mol-% durch Propylenoxid ersetzt sein kann, zugesetzt wird.

5. Verfahren nach Anspruch 4, dadurch gekennzeichnet, daß ein das verzweigte Polyethylenoxid enthaltendes Reaktionsprodukt aus Pentaerythrit oder Rizinusöl und Ethylenoxid zugesetzt wird.

6. Verfahren nach Anspruch 1 oder 2, dadurch gekennzeichnet, daß ein das verzweigte Polyethylenoxid enthaltendes Reaktionsprodukt aus einem niedermolekularen, wenigstens drei umesterbare Alkoxygruppen aufweisenden Silan oder Siloxan oder einer niedermolekularen, wenigstens drei Isocyanatgruppen oder umesterbare Carbonsäurealkylestergruppen aufweisenden Verbindung, wobei die den Carbonsäurealkylestergruppen zugrundeliegenden Carboxylgruppen über einen organischen Rest miteinander verbunden sind, einerseits, und einem unverzweigten Polyethylenoxidmonoalkylether, bei dem das zugrundeliegende Ethylenoxid bis zu 30 Mol-% durch Propylenoxid ersetzt sein kann, andererseits, zugesetzt wird.

7. Verfahren nach Anspruch 6, dadurch gekennzeichnet, daß ein das verzweigte Polyethylenoxid enthaltendes Reaktionsprodukt aus Tetraethoxysilan oder aus dem Trimerisierungsprodukt von Isophorondiisocyanat oder aus Trimesinsäuretrimethyl- oder Trimesinsäuretriethylester, Trimellithsäuretrimethyl- oder Trimellithsäuretriethylester einerseits und Polyethylenoxidmonoethylether andererseits zugesetzt wird.

8. Verfahren nach einem der Ansprüche 1 bis 7, dadurch gekennzeichnet, daß 0,01 bis 4,0, insbesondere 0,02 bis 3,0 Massenteile eines anionischen Emulgators, bezogen auf 100 Massenteile Monomer, zugesetzt werden.

9. Verfahren nach einem der Ansprüche 1 bis 8, dadurch gekennzeichnet, daß man als Polymerisationsinitiator 0,1 bis 2,5, insbesondere 0,1 bis 1,5 Massenteile eines Persulfats, bezogen auf 100 Massenteile Mono-

mer, zusetzt.

10. Verfahren nach einem der Ansprüche 1 bis 9, dadurch gekennzeichnet, daß man das Monomer/Wasser-Mengenverhältnis so einstellt, daß die Dispersion nach der Polymerisation einen Feststoffgehalt von 30 bis 55 Massen-% aufweist.

## Claims

1. A process for the preparation of an aqueous polymer dispersion with coarse particles by emulsion polymerisation of monomers which can be polymerised by means of free radicals, in the presence of an anionic emulsifier, a nonionic, water-soluble, polymeric assistant, a polymerisation initiator which forms free radicals, and conventional polymerisation assistants, characterised in that from 0.00001 to < 0,02 part by weight, based on 100 parts by weight of the monomer(s), of a branched polyethelene oxide having an $\overline{M}$w of from 4,000 to 19,000 is added before the polymerisation, a water-soluble alkali metal salt and/or ammonium salt is present at the beginning of the polymerisation, with the proviso that the aqueous phase contains, per litre, from 1 to 250 mmol of non-emulsifier-bonded alkali metal ions and/or ammonium ions, and the entire polymerisation is carried out by the batch method or the polymerisation is begun in the batch method and, after the particle-formation phase, is continued and completed under conventional conditions of graft polymerisation, during which the formation of new particles is avoided.

2. A process according to claim 1, characterised in that the polymerisation is begun in the batch method and, after the particle-formation phase, is continued and completed in the semicontinuous emulsion-feed method or in the semicontinuous monomer-feed method.

3. A process as claimed in claim 1 or 2, characterised in that an oxidised polyethylene oxide which contains the branched polyethylene oxide and has been obtained by oxidation of a polyethylene oxide having an $\overline{M}$w of from 2,500 to 6,500, in particular from 3,000 to 5,500, and has a carbonyl group content of from 0.1 to 2.0% by weight, in particular from 0.5 to 2.0% by weight, is added.

4. A process as claimed in claim 1 or 2, characterised in that a product, containing the branched polyethylene oxide, of the reaction of a low-molecular-weight compound containing at least three ethoxylatable, functional groups, and ethylene oxide, up to 30 mol-% of which may be replaced by propylene oxide, is added.

5. A process according to claim 4, characterised in that a product, containing the branched polyethylene oxide, of the reaction of pentaethritol or castor oil and ethylene oxide is added.

6. A process according to claim 1 or 2, characterised in that a product, containing the branched polyethylene oxide, of the reaction of, on the one hand, a low-molecular-weight silane or siloxane containing at least three alkoxy groups which are capable of being transesterified, or of a low-molecular-weight compound containing at least three isocyanate groups or alkyl carboxylate groups which are capable of being trans-esterified, the carboxyl groups on which the alkyl carboxylates are based being bonded to one another via an organic radical, and, on the other hand, an unbranched polyethylene oxide monoalkyl ether, in which up to 30 mol-% of the parent ethylene oxide may be replaced by propylene oxide, is added.

7. A process according to claim 6, characterised in that a product, containing the branched polyethylene oxide, of the reaction of, on the one hand, tetraethoxysilane or of the product of the trimerisation of isophorone diisocyanate or of trimethyl trimesate, triethyl trimesate, trimethyl trimellitate or triethyl trimellitate, and, on the other hand, polyethylene oxide monoethyl ether, is added.

8. A process according to any of claims 1 to 7, characterised in that from 0.01 to 4.0 parts by weight, in particular from 0.02 to 3.0 parts by weight, of an anionic emulsifier, based on 100 parts by weight of monomer, are added.

9. A process according to any of claims 1 to 8, characterised in that the polymerisation initiator added is from 0.1 to 2.5 parts by weight, in particular from 0.1 to 1.5 parts by weight, of a persulphate, based on 100 parts by weight of monomer.

10. A process according to any of claims 1 to 9, characterised in that the monomer : water mixing ratio is such that the dispersion has a solids content of from 30 to 55% by weight after the polymerisation.

## Revendications

1. Procédé pour la préparation de dispersions aqueuses de matières plastiques à particules de grande taille, par polymérisation en émulsion de monomères polymsérisables par polymérisation radicalaire en présence d'un émulsifiant anionique, d'un adjuvant polymère non ionique, soluble dans l'eau, d'un amorceur de polymérisation générateur de radicaux libres, et d'adjuvants de polymérisation usuels, caractérisé en ce que l'on ajoute avant la polymérisation, par rapport à 100 parties en masse du (des) monomères(s), de 0,00001 à < 0,02 partie en masse d'un polyoxyéthylène ramifié à $\overline{M}p$ = 4000 à 19000, au début de la polymérisation est présent un sel alcalin et/ou d'ammonium soluble dans l'eau, étant entendu que dans la phase aqueuse, par rapport à 1 litre de celle-ci, sont présentes de 1 à 250 mmoles d'ions alcalins et/ou ammonium non liés à l'émulsifiant, et on effectue toute la polymérisation dans un mode opératoire discontinu ou on commence la polymérisation en mode opératoire discontinu et après la phase de formation des particules, on poursuit et on amène à sa fin la polymérisation dans les conditions usuelles de la polymérisation par greffage, en évitant la formation de nouvelles particules.

2. Procédé selon la revendication 1, caractérisé en ce que la polymérisation est commencée en mode opératoire discontinu, et après la phase de formation des particules, on la poursuit et on la mène à sa fin en mode opératoire semi-continu d'addition d'émulsion ou en mode opératoire semi-continu d'addition des monomères.

3. Procédé selon les revendications 1 ou 2, caractérisé en ce que l'on ajoute un polyéthylène oxydé, contenant le polyoxyéthylène ramifié, qui est obtenu par oxydation d'un polyoxyéthylène à $\overline{M}p$ = 2500 à 6500, en particulier de 3000 à 5500, et présente une teneur en groupes carbonyle de 0,1 à 2,0, en particulier de 0,5 à 2,0% en masse.

4. Procédé selon la revendication 1 ou 2, caractérisé en ce que l'on ajoute un produit de réaction contenant le polyoxyéthylène ramifié, obtenu à partir d'un composé à faible poids moléculaire, comportant au moins trois groupes aptes à l'oxyéthylation, et de l'oxyde d'éthylène qui peut être remplacé jusqu'à 30% en moles par de l'oxyde de propylène.

5. Procédé selon la revendication 4, caractérisé en ce que l'on ajoute un produit de réaction, contenant le polyoxyéthylène ramifié, obtenu à partir de pentaérythritol ou d'huile de ricin et d'oxyde d'éthylène.

6. Procédé selon la revendication 1 ou 2, caractérisé en ce que l'on ajoute un produit de réaction, contenant le polyoxyéthylène ramifiés, obtenu à partir, d'une part, d'un silane ou siloxane à faible poids moléculaire, comportant au moins trois groupes alcoxy trans-estsérifiables, ou d'un composé à faible poids moléculaires, comportant au moins trois groupes isocyanate ou trois groupes carboxylate d'alkyle trans-estérifiables, les groupes carboxy qui sont à la base des groupes carboxylate d'alkyle étant liés les uns aux autres par l'intermédiaire d'un radical organique, et, d'autre part, d'un éther polyoxyéthylénique de monoalkyle non ramifié dans lequel l'oxyde d'éthylène de base peut être remplacé jusqu'à 30% en moles par de l'oxyde de propylène.

7. Procédé selon la revendication 6, caractérisé en ce que l'on ajoute un produit de réaction, contenant le polyoxyéthylène ramifié, obtenu à partir, d'une part, de tétraéthoxysilane ou du produit de trimérisation d'isophorone-diisocyanate ou de l'ester triméthylique ou triéthylique d'acide trimésique, de l'ester triméthylique ou triéthylique d'acide trimellithique, et, d'autre part, d'éther polyoxyéthylénique de monoéthyle.

8. Procédé selon l'une quelconque des revendications 1 à 7, caractérisé en ce que l'on ajoute de 0,01 à 4,0, en particulier de 0,02 à 3,0 parties en masse, d'un émulsifiant anionique, par rapport à 100 parties en masse de monomère.

9. Procédé selon l'une quelconque des revendication 1 à 8, caractérisé en ce que l'on ajoute, en tant qu'amorceur de polymérisation, de 0,1 à 2,5, en particulier de 0,1 à 1,5 parties en masse d'un persulfate, par rapport à 100 parties en masse de monomère.

10. Procédé selon l'une quelconque des revendications 1 à 9, caractérisé en ce que l'on ajuste le rapport des quantités des monomères/eau de manière qu'après la polymérisation, la dispersion présente une teneur en matière sèche de 30 à 55% en masse.